# EUROPÄISCHE PATENTANMELDUNG

(11) **EP 3 886 391 A1**
(43) Veröffentlichungstag der Anmeldung: **29.09.2021**
(21) Anmeldenummer: 20165927.3
(22) Anmeldetag: 26.03.2020
(51) Int. Cl.: H04L 29/06

(54) **REKONFIGURIEREN EINES REKONFIGURATIONSMODULS EINES FIELD PROGRAMMABLE GATE ARRAYS**

(71) Anmelder: Siemens Aktiengesellschaft, 80333 München (DE)
(72) Erfinder: De Santis, Fabrizio, 80634 München (DE); Sel, Tolga, 81379 München (DE)

(57) **Zusammenfassung**

Die Erfindung gibt ein Verfahren für ein Rekonfigurieren eines ersten Rekonfigurationsmoduls (1) eines Field Programmable Gate Arrays (6) durch ein zweites Rekonfigurationsmodul (2) des Field Programmable Gate Arrays (6) mit den Schritten:
- Verbinden des zweiten Rekonfigurationsmoduls (2) (S1) mit einer Rekonfigurationsschnittstelle (4),
- Laden eines partiellen Bitstreams (S2) in eine erste interne Speichereinheit (5) des Field Programmable Gate Arrays (6), wobei der partielle Bitstream verschlüsselt und authentifiziert ist,
- Erstellen eines entschlüsselten partiellen Bitstreams (S3), wobei der entschlüsselte partielle Bitstream durch Authentifizieren und Entschlüsseln des partiellen Bitstreams durch Anwendung kryptographischer Mechanismen erstellt wird und
- Laden des entschlüsselten partiellen Bitstreams (S4) in die Rekonfigurationsschnittstelle (4), wobei durch das Laden des entschlüsselten partiellen Bitstreams ein drittes Rekonfigurationsmodul (3) erstellt wird, wobei das dritte Rekonfigurationsmodul (3) eine Rekonfiguration des ersten Rekonfigurationsmoduls (1) darstellt, an.

Die Erfindung gibt außerdem ein Field Programmable Gate Array (6) an.

## Beschreibung

### HINTERGRUND DER ERFINDUNG

### Gebiet der Erfindung

Die vorliegende Erfindung betrifft ein Verfahren für ein Rekonfigurieren eines ersten Rekonfigurationsmoduls eines Field Programmable Gate Arrays durch ein zweites Rekonfigurationsmodul des Field Programmable Gate Arrays. Des Weiteren betrifft die Erfindung ein Field Programmable Gate Array, das zur Durchführung eines solchen Verfahrens ausgebildet ist.

### Beschreibung des Stands der Technik

Ein Field Programmable Gate Array (FPGA) ist ein integrierter Schaltkreis der Digitaltechnik. Anders als bei der Programmierung von Computern, Microcontrollern oder Steuerungen bezieht sich hier der Begriff "Programmierung" nicht nur auf die Vorgabe zeitlicher Abläufe, sondern vor allem auf die Definition der gewünschten Schaltungsstruktur.

Die Schaltungsstruktur eines FPGAs wird mittels einer Hardwarebeschreibungssprache formuliert und von einer Erzeugersoftware in eine Konfigurationsdatei, den Hauptbitstream, übersetzt. Der Hauptbitstream gibt vor, wie die physikalischen Elemente im FPGA-Bereich konfiguriert und verschaltet werden sollen. Man spricht daher auch von der Konfiguration eines FPGA (FPGA-Konfiguration).

Die partielle Rekonfiguration für FPGAs ermöglicht die Modifikation einzelner Logikblöcke eines FPGAs zur Laufzeit. Ähnlich wie bei der Konfiguration eines FPGA mittels Hauptbitstream wird für die die Modifikation einzelner Logikblöcke eines FPGAs zur Laufzeit eine Konfigurationsdatei, der partielle Bitstream, erzeugt. Mit partiellen Bitstreams werden bestimmte Regionen auf dem FPGA zur Laufzeit über eine Rekonfigurationschnittstelle umkonfiguriert, ohne andere Regionen zu löschen oder zu pausieren. Auf Xilinx-FPGAs heißt die Rekonfigurationsschnittstelle beispielsweise "Internal Configuration Access Port" (ICAP).

Ein Soft-core, auch Soft-CPU genannt, (engl. wörtlich "weiche Zentraleinheit", sinngemäß programmierbare Zentraleinheit) ist ein Prozessor, welcher als Teil eines FPGA-Designs integriert werden kann. Im Regelfall werden Soft-CPUs in FPGAs dazu verwendet, komplizierte Aufgaben zu erledigen, die eine klassische State Maschine nicht erfüllen kann. Beispiele für Soft-CPUs sind Xilinx Microblaze, ARM Cortex-Ml, Altera NIOS, Zylin ZPU und ein RISC-V Prozessor.

Mittels partieller Rekonfiguration können Teile eines FPGA-Designs zur Laufzeit aktualisiert (rekonfiguriert/upgedatet) werden. Die Updateprozedur (partielle Rekonfiguration) wird von einem dafür ausgerüsteten Modul (Update-Modul, Rekonfigurationsmodul) durchgeführt. Soll das Update-Modul (Rekonfigurationsmodul) selbst aktualisiert werden, besteht folgendes Problem: Da das Update-Modul sich selbst mit einer neuen Schaltungsstruktur überschreibt, kann ein Zeitpunkt im Updateprozess existieren, in der das Update-Modul nicht mehr funktionsfähig ist. Ohne ein funktionsfähiges Update-Modul kann jedoch das Update nicht finalisiert werden, um eine neue betriebsfähige Version zu instanziieren. In anderen Worten: Das Update-Modul kann sich selbst nicht überschreiben und dabei durchgehend lauffähig/funktionsfähig bleiben, um die Updateprozedur erfolgreich zu beenden.

Eine Methode, um ein Update-Modul zu updaten, ist der Tausch des Hauptbitstreams (daher die Neukonfigurierung des gesamten FPGAs mit einem neuen Bitstream). Die Lösung hat als Nachteil, dass das Update des Update-Moduls nicht zur Laufzeit stattfinden kann, da das Update-Modul sich selbst nicht überschreiben kann. Weiterhin muss das FPGA neugestartet werden, wodurch das Gesamtsystem neu konfiguriert werden muss und somit temporär nicht funktionsfähig ist.

Die Aufgabe der Erfindung besteht darin, eine Lösung bereitzustellen, um ein Update-Modul zur Laufzeit zu updaten, ohne den kompletten Hauptbitstream austauschen zu müssen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Die Erfindung betrifft ein Verfahren für ein Rekonfigurieren eines ersten Rekonfigurationsmoduls eines Field Programmable Gate Arrays durch ein zweites Rekonfigurationsmodul des Field Programmable Gate Arrays.

Das Verfahren weist die folgenden Schritte auf:
- Verbinden des zweiten Rekonfigurationsmoduls mit einer Rekonfigurationsschnittstelle,
- Laden eines partiellen Bitstreams in eine erste interne Speichereinheit des Field Programmable Gate Arrays, wobei der partielle Bitstream verschlüsselt und authentifiziert ist,
- Erstellen eines entschlüsselten partiellen Bitstreams, wobei der entschlüsselte partielle Bitstream durch Authentifizieren und Entschlüsseln des partiellen Bitstreams durch Anwendung kryptographischer Mechanismen erstellt wird und
- Laden des entschlüsselten partiellen Bitstreams in die Rekonfigurationsschnittstelle, wobei durch das Laden des entschlüsselten partiellen Bitstreams ein drittes Rekonfigurationsmodul erstellt wird, wobei das dritte Rekonfigurationsmodul eine Rekonfiguration des ersten Rekonfigurationsmoduls darstellt.

Das erste Rekonfigurationsmodul und das zweite Rekonfigurationsmodul sind dazu ausgebildet, eine partielle Rekonfiguration des Field Programmable Gate Arrays durchzuführen.

Das erste Rekonfigurationsmodul und das zweite Rekonfigurationsmodul können mit einer Rekonfigurationsschnittstelle des Field Programmable Gate Arrays verbunden werden, wobei die Rekonfigurationsschnittstelle dazu ausgebildet ist, die partielle Rekonfiguration zu unterstützen.

Das erste Rekonfigurationsmodul und das zweite Rekonfigurationsmodul sind dazu ausgebildet, kryptographische Mechanismen durchzuführen. Die kryptographischen Mechanismen schützen die partielle Rekonfiguration bzw. gewährleisten eine sichere partielle Rekonfiguration (Vertraulichkeit und Integrität sind sichergestellt).

Das Erstellen des entschlüsselten partiellen Bitstreams (bzw. eine Authentisierung des partiellen Bitstreams) kann beispielsweise durch das zweite Rekonfigurationsmodul durchgeführt werden. Alternativ kann das Erstellen des entschlüsselten partiellen Bitstreams bzw. eine Authentisierung des partiellen Bitstreams) auch durch ein spezielles Kryptopmodul (z.B. AEAD, Authenticated Encryption with Associated Data) oder das erste Rekonfigurationsmodul durchgeführt werden.

Das spezielle Kryptopmodul (z.B. AEAD, Authenticated Encryption with Associated Data) kann zum Beispiel von dem ersten Rekonfigurationsmodul oder dem zweiten Rekonfigurationsmodul beauftragt werden, eine Validierung (Bestätigung der Authentizität) und/oder ein Erstellen des entschlüsselten partiellen Bitstreams/ eine Entschlüsselung durchzuführen.

Das spezielle Kryptomodul kann die benötigten kryptographischen Schlüssel von einer PUF oder einem anderen FPGA-Schlüsselspeicher (z.B. Battery-backed RAM oder eFuses) erhalten.

Das Laden des entschlüsselten partiellen Bitstreams in die Rekonfigurationsschnittstelle kann durch das zweite Rekonfigurationsmodul erfolgen. Alternativ besteht die Möglichkeit, dass das zweite Rekonfigurationsmodul die eigentliche Ausführung der Rekonfiguration an einen Rekonfigurationslader auslagert. Ein Rekonfigurationslader ist ein sehr schlichtes Modul, das die Information erhält, wo ein (partieller) Bitstream abgespeichert ist (z.B. in der ersten internen Speichereinheit) und, dass der Rekonfigurationslader das (partielle) Bitstream in die Rekonfigurationsschnittstelle laden soll. Während der Rekonfigurationslader den entschlüsselten partiellen Bitstream in die Rekonfigurationsschnittstelle überträgt/lädt, kann das zweite Rekonfigurationsmodul andere Aufgaben ausführen.

Das erstes Rekonfigurationsmodul kann auch als erstes Update-Modul bezeichnet werden. Das zweite Rekonfigurationsmodul kann auch als zweites Update-Modul bezeichnet werden.

Das zweite Update-Modul/Rekonfigurationsmodul lädt den verschlüsselten und authentifizierten partiellen Bitstream in die erste interne Speichereinheit. Die erste interne Speichereinheit kann als Block Random Access Memory (Block-RAM, BRAM) ausgebildet sein. Anschließend wird der partielle Bitstream in beispielsweise einer AEAD-Komponente (Authenticated Encryption with Associated Data Komponente) oder durch eines der Rekonfigurationsmodule authentifiziert und entschlüsselt. Ein entschlüsselter Bitstream wird erstellt. Der entschlüsselte Bitstream kann in der ersten interne Speichereinheit des FPGAs zwischengespeichert werden, um es vor Angreifern zu schützen. Danach wird der entschlüsselte Bitstream in die Rekonfigurationsschnittstelle geladen und somit das Update/das Rekonfigurieren/das Aktualisieren instanziiert.

Das Laden des partiellen Bitstreams in die erste interne Speichereinheit des Field Programmable Gate Arrays kann in einem Vorgang vollständig oder aufgeteilt auf mehrere Vorgänge (häppchenweise) erfolgen. Ein Laden aufgeteilt in mehrere Vorgänge ist von Vorteil, wenn auf dem Field Programmable Gate Arrays nicht genug Platz verfügbar ist, um das partielle Bitstream in einem Vorgang vollständig zu laden.

Optional kann nach einem erfolgreichen Update/Laden des entschlüsselten partiellen Bitstreams das dritte Rekonfigurationsmodul mit der Rekonfigurationsschnittstelle verbunden werden und eine partielle FPGA-Konfiguration/ein Aktualisieren/ein Rekonfigurieren des zweiten Rekonfigurationsmoduls durchführen. Das dritte Rekonfigurationsmodul kann also auch das zweite Rekonfigurationsmodul rekonfigurieren.

Ein Aspekt der Erfindung besteht darin, ein zweites Rekonfigurationsmodul bereitzustellen, welches einen kryptographisch geschützten partiellen Bitstream ausführen kann und so ein sicheres Rekonfigurieren eines ersten Rekonfigurationsmoduls durchführt.

In einer weiteren Ausführungsform der Erfindung wird das zweite Rekonfigurationsmodul nach dem Laden des entschlüsselten partiellen Bitstreams von der Rekonfigurationsschnittstelle getrennt und das dritte Rekonfigurationsmodul mit der Rekonfigurationsschnittstelle verbunden. Das ist notwendig, da das zweite Rekonfigurationsmodul mit der Rekonfigurationsschnittstelle verbunden sein muss, um die Rekonfiguration des ersten Rekonfigurationsmoduls durchzuführen.

In einer weiteren Ausführungsform der Erfindung wird das zweite Rekonfigurationsmodul zur Laufzeit des Field Programmable Gate Arrays geladen. Das hat den Vorteil, dass das Field Programmable Gate Array nicht gestoppt/abgeschaltet und/oder neugestartet werden muss, um die Rekonfiguration/das Aktualisieren des ersten Rekonfigurationsmoduls durchzuführen.

In einer weiteren Ausführungsform der Erfindung wird das zweite Rekonfigurationsmodul nach dem Laden des entschlüsselten partiellen Bitstreams gelöscht. Das hat den Vorteil, dass Speicherplatz für andere Module/Elemente freigegeben wird. Sollte eine erneute Rekonfiguration durchgeführt werden müssen, so kann das zweite Rekonfigurationsmodul erneut geladen werden.

In einer weiteren Ausführungsform der Erfindung wird das erste Rekonfigurationsmodul nach dem Laden des entschlüsselten partiellen Bitstreams gelöscht. Das hat den Vorteil, dass Speicherplatz für andere Module/Elemente freigegeben wird. Das erste Rekonfigurationsmodul ist nach dem Erstellen des dritten Rekonfigurationsmodul nicht mehr zwingend nötig, da das dritte Rekonfigurationsmodul eine Rekonfiguration/Aktualisiserung des ersten Rekonfigurationsmoduls darstellt.

In dieser Variante wird das erste Rekonfigurationsmodul nicht von dem dritten Rekonfigurationsmodul überschrieben, sondern es wird ein leeres Modul für das Update/das Rekonfigurieren vorgesehen. In diesem Fall wird das dritte Rekonfigurationsmodul in das vorgesehene leere Modul geladen. Sollte der Update-Prozess fehlschlagen oder das dritte Rekonfigurationsmodul nach dem Update nicht funktionsfähig sein, kann zurück zu dem ersten Rekonfigurationsmodul geschaltet werden. Optional kann das erste Rekonfigurationsmodul in diesem Fall nach einem erfolgreichen Update gelöscht werden, um wieder Platz auf dem FPGA zu gewinnen. Eine kommende Aktualisierung des dritten Rekonfigurationsmodules kann diesen Platz für die Aktualisierung/Rekonfiguration des dritten Rekonfigurationsmoduls nutzen.

In einer weiteren Ausführungsform der Erfindung sind das erste Rekonfigurationsmodul, das zweite Rekonfigurationsmodul und/oder das dritte Rekonfigurationsmodul eine einfache Finite-State-Machine (ein Hardware-Modul), eine programmierbare Finite-State-Machine und/oder eine Soft-CPU (mit entsprechender Firmware).

Ein Soft-core, auch Soft-CPU genannt, (engl. wörtlich "weiche Zentraleinheit", sinngemäß programmierbare Zentraleinheit) ist ein Prozessor, welcher als Teil eines FPGA-Designs integriert werden kann. Im Regelfall werden Soft-CPUs in FPGAs dazu verwendet, komplizierte Aufgaben zu erledigen, die eine klassische State Maschine nicht erfüllen kann. Beispiel für Soft-CPUs sind Xilinx Microblaze, ARM Cortex-Ml, Altera NIOS und Zylin ZPU oder ein RISC-V Prozessor.

In einer weiteren Ausführungsform der Erfindung weisen die kryptographischen Mechanismen ein AEAD- (authenticated encryption with associated data) Entschlüsselungsverfahren (beispielsweise AES-GCM) mit/ohne einer Physically Unclonable Function (PUF) zur Schlüsselgenerierung/Schlüsselspeicherung auf. Alternativ kann der Schlüssel in herkömmliche BBRAM oder eFuses Speichertechnologie gespeichert.

In einer weiteren Ausführungsform der Erfindung wird vor dem Verbinden des zweiten Rekonfigurationsmoduls mit der Rekonfigurationsschnittstelle ein Trennen des ersten Rekonfigurationsmoduls von der Rekonfigurationsschnittstelle durchgeführt. Das hat den Vorteil, dass das zweite Rekonfigurationsmodul mit der Rekonfigurationsschnittstelle verbunden werden kann, um die Rekonfiguration des ersten Rekonfigurationsmoduls durchzuführen.

In einer weiteren Ausführungsform der Erfindung wird das Trennen des ersten Rekonfigurationsmoduls von der Rekonfigurationsschnittstelle und das Verbinden des zweiten Rekonfigurationsmodul mit der Rekonfigurationsschnittstelle durch ein Umschalten (in einem Schritt) zwischen dem ersten Rekonfigurationsmodul und dem zweiten Rekonfigurationsmodul durchgeführt. Das hat den Vorteil, dass immer mindestens eines der beiden Rekonfigurationsmodule (erstes Rekonfigurationsmodul oder zweites Rekonfigurationsmodul) mit der Rekonfigurationsschnittstelle verbunden ist.

Ebenfalls kann ein Trennen des zweiten Rekonfigurationsmoduls von der Rekonfigurationsschnittstelle und ein Verbinden des dritten Rekonfigurationsmodul mit der Rekonfigurationsschnittstelle nach dem Laden des entschlüsselten partiellen Bitstreams durch ein Umschalten erfolgen. Das hat den Vorteil, dass das dritte Rekonfigurationsmodul, welches eine Aktualisierung des ersten Rekonfigurationsmoduls darstellt, mit der Rekonfigurationsschnittstelle verbunden ist und über die Rekonfigurationsschnittstelle eine partielle Rekonfiguration durchführen kann.

In einer weiteren Ausführungsform der Erfindung wird das Umschalten durch eine partielle Rekonfiguration zum Umschalten, einem Multiplexer und/oder einem Tristate durchgeführt.

In einer weiteren Ausführungsform der Erfindung wird durch das Laden des entschlüsselten partiellen Bitstreams ein Rekonfigurieren des ersten Rekonfigurationsmoduls durch das zweite Rekonfigurationsmodul und ein Ersetzen des ersten Rekonfigurationsmoduls durch ein drittes Rekonfigurationsmodul initiiert. In diesem Fall wird das erste Rekonfigurationsmodul direkt durch das dritte Rekonfigurationsmodul überschrieben.

In einer weiteren Ausführungsform der Erfindung wird das erste Rekonfigurationsmodul vor dem Laden des entschlüsselten partiellen Bitstreams in eine zweite interne Speicherinheit des Field Programmable Gate Arrays kopiert. Das hat den Vorteil, dass eine Sicherheitskopie vorhanden ist.

In dieser Variante wird das erste Rekonfigurationsmodul vor der FPGA-Rekonfiguration in einem Speicher gesichert (Backup z.B. über Rekonfigurationsschnittstelle-Readback Funktionalität oder als separates Bitstream). Sollte der Update-Prozess/ die Rekonfiguration des ersten Rekonfigurationsmoduls fehlschlagen oder das dritte Rekonfigurationsmodul nach dem Update/Laden des entschlüsselten partiellen Bitstreams nicht funktionsfähig sein, dann kann das erste Rekonfigurationsmodul wieder auf das FPGA geladen werden.

In einer weiteren Ausführungsform der Erfindung wird der entschlüsselte partielle Bitstream in der ersten internen Speichereinheit gespeichert. Das hat den Vorteil, dass der entschlüsselte partielle Bitstream vor Angreifern geschützt wird. Dies hat außerdem den Vorteil, dass der partielle Bitstream zu einem späteren Zeitpunkt zur Verfügung steht.

Der entschlüsselte Bitstream kann somit, wie auch der verschlüsselte partielle Bitstream, in der ersten internen Speichereinheit zwischengespeichert und anschließend in die Rekonfigurationsschnittstelle geladen werden.

In dem Fall, dass auch eine Rekonfiguration des zweiten Rekonfigurationsmoduls durch das dritte Rekonfigurationsmodul stattfinden soll, können die partiellen Bitstreams entweder nacheinander in die erste interne Speichereinheit geladen werden oder beide partiellen Bitstreams für das zweite und das dritte Rekonfigurationsmodul noch vor der Rekonfiguration des ersten Rekonfigurationsmoduls in einem Schritt von extern in die erste interne Speichereinheit geladen werden.

Die Erfindung beansprucht außerdem ein Field Programmable Gate Array (FPGA). Das Field Programmable Gate Array weist die folgenden Elemente auf:
- ein erstes Rekonfigurationsmodul,
- ein zweites Rekonfigurationsmodul, wobei das zweite Rekonfigurationsmodul dazu ausgebildet ist, das erste Rekonfigurationsmodul zu rekonfigurieren,
- eine Rekonfigurationsschnittstelle, wobei die Rekonfigurationsschnittstelle dazu ausgebildet ist, mit dem zweiten Rekonfigurationsmodul verbunden zu werden,
- eine erste interne Speichereinheit des Field Programmable Gate Arrays, wobei in die erste interne Speichereinheit ein partieller Bitstream geladen werden kann, wobei der partielle Bitstream verschlüsselt und authentifiziert ist und
- ein Entschlüsselungsmodul, wobei das Entschlüsselungsmodul ausgebildet ist, einen entschlüsselten partiellen Bitstream zu erstellen, wobei der entschlüsselte partielle Bitstream durch Authentifizieren und Entschlüsseln des partiellen Bitstreams durch Anwendung kryptographischer Mechanismen erstellt wird.

Der entschlüsselte partielle Bitstream ist ausgebildet, in die Rekonfigurationsschnittstelle geladen und ausgeführt zu werden, wobei durch ein Laden des entschlüsselten partiellen Bitstreams ein drittes Rekonfigurationsmodul erstellt wird, wobei das dritte Rekonfigurationsmodul eine Rekonfiguration des ersten Rekonfigurationsmoduls darstellt.

Das Entschlüsselungsmodul kann beispielsweise das zweite Rekonfigurationsmodul sein. Alternativ kann das Entschlüsselungsmodul ein spezielles Kryptopmodul (z.B. AEAD, Authenticated Encryption with Associated Data) oder das erste Rekonfigurationsmodul sein.

Das spezielle Kryptopmodul (z.B. AEAD, Authenticated Encryption with Associated Data) kann zum Beispiel von dem ersten Rekonfigurationsmodul oder dem zweiten Rekonfigurationsmodul beauftragt werden, eine Validierung (Bestätigung der Authentizität) und/oder ein Erstellen des entschlüsselten partiellen Bitstreams/ eine Entschlüsselung durchzuführen.

In einer weiteren Ausführungsform der Erfindung ist das Field Programmable Gate Array ausgebildet ein erfindungsgemäßes Verfahren durchzuführen.

Die Erfindung bietet den Vorteil, dass nicht nur allgemeinen Teile eines FPGA-Designs zur Laufzeit aktualisiert werden können, sondern auch der Updatemechanismus/das Update-Modul/das Rekonfigurationsmodul, das für die partielle FPGA-Rekonfiguration selbst vorgesehen ist, upgedatet/aktualisiert werden kann, ohne das System/das FPGA stoppen oder neustarten zu müssen.

So kann eine Langzeitsicherheit gewährleistet werden, da alle Komponenten/Module auf dem FPGA austauschbar sind. Daher sind auch die Update-Module/ Rekonfigurationsmodule austauschbar/aktualisierbar/updatebar, die bislang nicht updatebar waren, ohne den Hauptbitstream zu tauschen. So kann die langfristige Sicherheit von FPGA-Systemen sichergestellt werden.

Ein weiterer Vorteil der Erfindung ist, dass das Update/die Rekonfiguration/das Aktualisieren des Update-Moduls/des Rekonfigurationsmoduls kryptographisch geschützt abläuft.

Die Erfindung kann in verschiedenen Gebieten eingesetzt werden kann. Ein mögliches Anwendungsbeispiel sind FPGA-basierte Secure Elements. FPGA-basierte Secure Elements verfügen über ein Update-Mechanismus. Dieser Update-Mechanismus kann dazu verwendet werden, um Komponenten auf dem FPGA auszutauschen und/oder auch Module am Secure Element an sich auszutauschen. Bislang existierte das Problem, dass die Update-Funktionalität des Secure Elements nicht getauscht werden konnte. Mit dieser Erfindung kann die Update-Funktionalität des Secure Elements auch ausgetauscht werden. So kann eine garantierte Langzeitsicherheit gewährleistet werden, da alle Komponenten auf dem FPGA austauschbar sind. Gleichzeitig würde das Secure Element nie deaktiviert oder neugestartet werden (on-the-fly update).

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein erstes Ausführungsbeispiel der Erfindung,
- Fig. 2: ein zweites Ausführungsbeispiel der Erfindung,
- Fig. 3: einen Ablauf des erfindungsgemäßen Verfahrens und
- Fig. 4: ein erfindungsgemäßes Field Programmable Gate Array.

### DETAILLIERTE BESCHREIBUNG DER ERFINDUNG

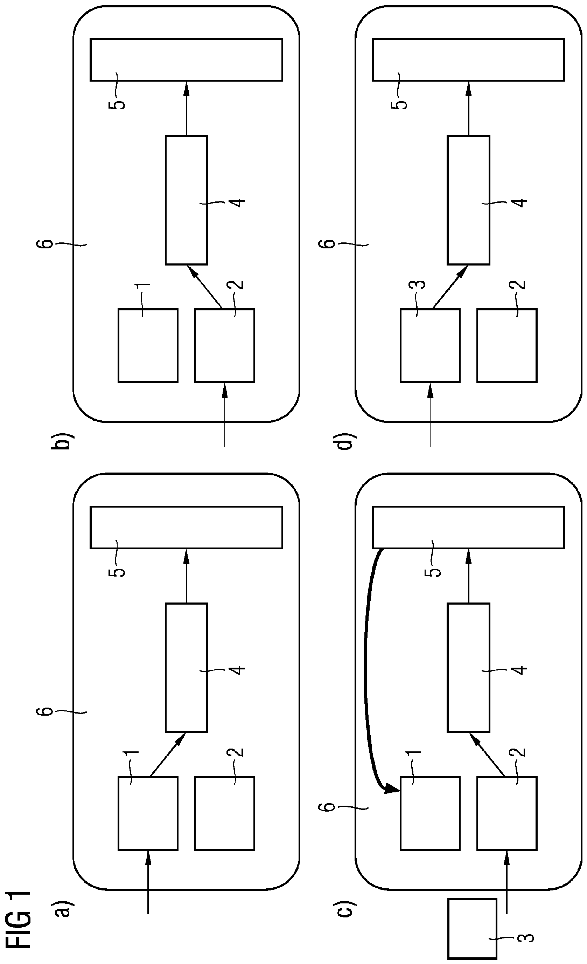

Fig. 1 zeigt ein erstes Ausführungsbeispiel der Erfindung.

Gemäß einer Ausführung der Erfindung wird das generelle Rekonfigurieren/die Updateprozedur mit zwei Rekonfigurationsmodulen/Update-Modulen (erstes Rekonfigurationsmodul 1 und zweites Rekonfigurationsmodul 2) im Hauptbitstream des Field Programmable Gate Arrays 6 / FPGAs 6 versehen:
a) Im ursprünglichen/generellen Zustand wird das erste Rekonfigurationsmodul 1 zur partiellen Rekonfiguration verwendet und ist mit der Rekonfigurationsschnittstelle 4 verbunden. Sollen konventionelle partielle Bitstreams auf dem FPGA 6 zur Laufzeit aktualisiert werden, dann führt das erste Rekonfigurationsmodul 1 die partielle FPGA-Konfiguration über die Rekonfigurationsschnittstelle 4 durch. Das erste Rekonfigurationsmodul 1 kann darüber informiert werden (dargestellt durch den Pfeil von extern auf das erste Rekonfigurationsmodul 1), dass es aktualisiert/rekonfiguriert werden soll. Dadurch kann der folgende Schritt getriggert werden.
b) Soll das erste Rekonfigurationsmodul 1 selbst zur Laufzeit aktualisiert werden (dies kann beispielsweise durch einen Input von extern (Pfeil in a)) und/oder einem Laden des partiellen Bitstreams / einer Rekonfigurationsdatei / eines Updates getriggert sein), dann übernimmt das zweite Rekonfigurationsmodul 2 die Kontrolle der Rekonfigurationsschnittstelle 4 (Umschaltung von dem ersten Rekonfigurationsmodul 1 zu dem zweiten Rekonfigurationsmodul 2, Verbinden des zweiten Rekonfigurationsmoduls 2 mit der Rekonfigurationsschnittstelle 4). Der partielle Bitstream zur Rekonfiguration des kann von dem ersten Rekonfigurationsmodul 1 oder dem zweiten Rekonfigurationsmodul 2 in einen internen Speicher des FPGAs 6 geladen werden.
c) Anschließend führt das zweite Rekonfigurationsmodul 2 die partielle FPGA-Konfiguration / die Rekonfiguration / das Aktualisieren des ersten Rekonfigurationsmoduls 1 mit dem dritten Rekonfigurationsmodul 3 über die Rekonfigurationsschnittstelle 4 durch (das zweite Rekonfigurationsmodul 2 updatet/aktualisiert das erste Rekonfigurationsmodul 1 und ersetzt es mit dem dritten Rekonfigurationsmodul 3).
d) Anschließend übergibt das zweite Rekonfigurationsmodul 2 die Kontrolle der Rekonfigurationsschnittstelle 4 an das neue dritte Rekonfigurationsmodul 3 (aktualisiertes erstes Rekonfigurationsmodul 1).

Optional kann nach einem erfolgreichen Update/Rekonfigurieren (des ersten Rekonfigurationsmoduls 1 durch das zweite Rekonfigurationsmodul 2) das zweite Rekonfigurationsmodul 2 ebenfalls aktualisiert/rekonfiguriert werden. Hierzu führt das dritte Rekonfigurationsmodul 3 (neues erstes Rekonfigurationsmodul) die partielle FPGA-Konfiguration des zweiten Rekonfigurationsmodul 2 über die Rekonfigurationsschnittstelle 4 durch.

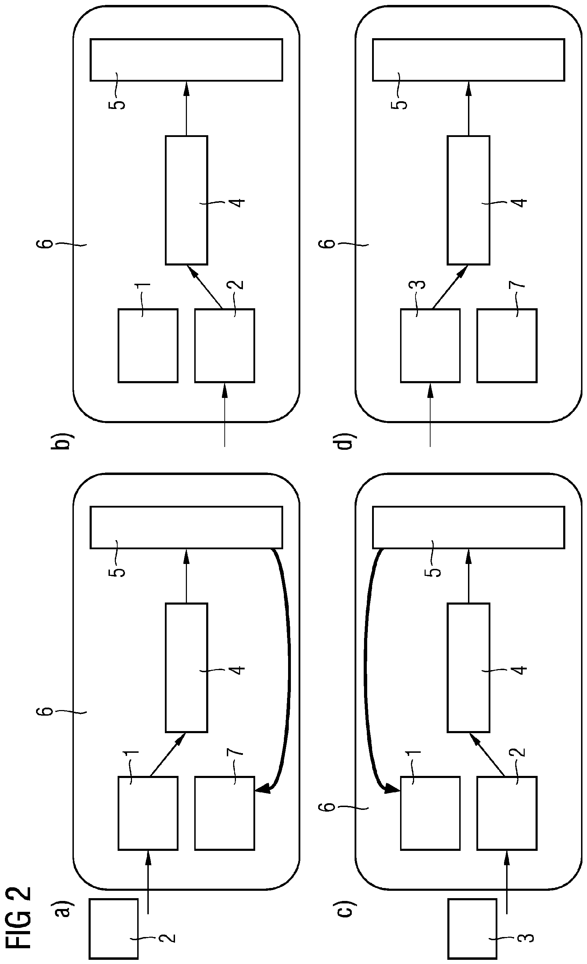

Fig. 2 zeigt ein zweites Ausführungsbeispiel der Erfindung.

Gemäß einer Ausführung der Erfindung wird das generelle Rekonfigurieren / die Updateprozedur mit einem Update-Modul (erstes Rekonfigurationsmodul 1) im Hauptbitstream versehen, wobei ein zweites Update-Modul (zweites Rekonfigurationsmodul 2) zur Aktualisierung des ersten Rekonfigurationsmoduls 1 auf das Field Programmable Gate Array 6 / FPGA 6 zur Laufzeit geladen wird:
a) Im ursprünglichen/generellen Zustand wird das erste Rekonfigurationsmodul 1 zur partiellen Rekonfiguration verwendet und ist mit der Rekonfigurationsschnittstelle 4 verbunden. Sollen konventionelle partielle Bitstreams auf dem FPGA 6 zur Laufzeit aktualisiert werden, dann führt das erste Rekonfigurationsmodul 1 die partielle FPGA-Konfiguration über die Rekonfigurationsschnittstelle 4 durch.
b) Soll das erste Rekonfigurationsmodul 1 selbst zur Laufzeit aktualisiert werden, wird zunächst das zweite Rekonfigurationsmodul 2 in ein leeres Modul 7 (freier Speicherplatz) über das erste Rekonfigurationsmodul 1 geladen. Anschließend übernimmt das zweite Rekonfigurationsmodul 2 die Kontrolle der Rekonfigurationsschnittstelle 4 (Umschaltung von dem ersten Rekonfigurationsmodul 1 zu dem zweiten Rekonfigurationsmodul 2, Verbinden des zweiten Rekonfigurationsmoduls 2 mit der Rekonfigurationsschnittstelle 4).
c) Anschließend führt das zweite Rekonfigurationsmodul 2 die partielle FPGA-Konfiguration / die Rekonfiguration / das Aktualisieren des ersten Rekonfigurationsmoduls 1 mit dem dritten Rekonfigurationsmodul 3 über die Rekonfigurationsschnittstelle 4 durch (das zweite Rekonfigurationsmodul 2 updatet/aktualisiert das erste Rekonfigurationsmodul 1 und ersetzt es mit dem dritten Rekonfigurationsmodul 3).
d) Anschließend übergibt das zweite Rekonfigurationsmodul 2 die Kontrolle der Rekonfigurationsschnittstelle 4 an das neue dritte Rekonfigurationsmodul 3 (aktualisiertes erstes Rekonfigurationsmodul 1). Optional: das dritte Rekonfigurationsmodul 3 löscht das zweite Rekonfigurationsmodul 2. So stehet wieder ein leeres Modul 7 zur Verfügung.

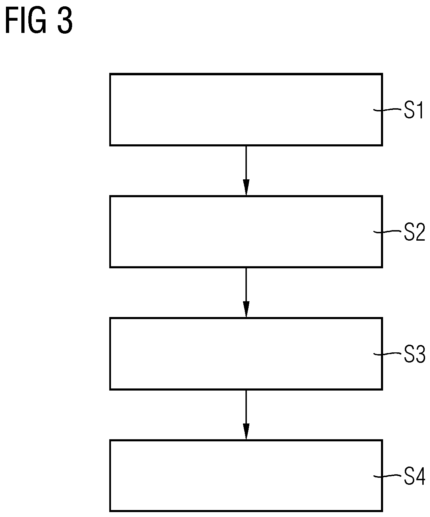

Fig. 3 zeigt einen Ablauf des erfindungsgemäßen Verfahrens für ein Rekonfigurieren eines ersten Rekonfigurationsmoduls 1 eines Field Programmable Gate Arrays 6 durch ein zweites Rekonfigurationsmodul 2 des Field Programmable Gate Arrays 6. Das Verfahren weist die folgenden Schritte auf:
- Schritt S1: Verbinden des zweiten Rekonfigurationsmoduls 2 mit einer Rekonfigurationsschnittstelle 4,
- Schritt S2: Laden eines partiellen Bitstreams in eine erste interne Speichereinheit 5 des Field Programmable Gate Arrays 6, wobei der partielle Bitstream verschlüsselt und authentifiziert ist,
- Schritt S3: Erstellen eines entschlüsselten partiellen Bitstreams, wobei der entschlüsselte partielle Bitstream durch Authentifizieren und Entschlüsseln des partiellen Bitstreams durch Anwendung kryptographischer Mechanismen erstellt wird und
- Schritt S4: Laden des entschlüsselten partiellen Bitstreams in die Rekonfigurationsschnittstelle 4, wobei durch das Laden des entschlüsselten partiellen Bitstreams ein drittes Rekonfigurationsmodul 3 erstellt wird, wobei das dritte Rekonfigurationsmodul 3 eine Rekonfiguration des ersten Rekonfigurationsmoduls 1 darstellt.

Das Erstellen des entschlüsselten partiellen Bitstreams S3 (bzw. eine Authentisierung des partiellen Bitstreams) kann beispielsweise durch das zweite Rekonfigurationsmodul 2 durchgeführt werden. Alternativ kann das Erstellen des entschlüsselten partiellen Bitstreams S3 bzw. eine Authentisierung des partiellen Bitstreams) auch durch ein spezielles Kryptopmodul (z.B. AEAD, Authenticated Encryption with Associated Data) oder das erste Rekonfigurationsmodul 1 durchgeführt werden.

Das spezielle Kryptopmodul (z.B. AEAD, Authenticated Encryption with Associated Data) kann zum Beispiel von dem ersten Rekonfigurationsmodul 1 oder dem zweiten Rekonfigurationsmodul 2 beauftragt werden, eine Validierung (Bestätigung der Authentizität) und/oder ein Erstellen des entschlüsselten partiellen Bitstreams S3/ eine Entschlüsselung durchzuführen.

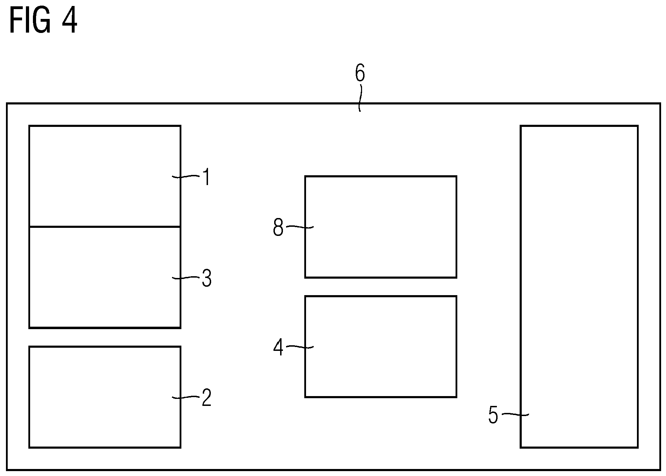

Fig. 4 zeigt ein Field Programmable Gate Array 6. Das Field Programmable Gate Array 6 weist die folgenden Komponenten auf:
- ein erstes Rekonfigurationsmodul 1,
- ein zweites Rekonfigurationsmodul 2, wobei das zweite Rekonfigurationsmodul 2 dazu ausgebildet ist, das erste Rekonfigurationsmodul 1 zu rekonfigurieren,
- eine Rekonfigurationsschnittstelle 4, wobei die Rekonfigurationsschnittstelle 4 dazu ausgebildet ist, mit dem zweiten Rekonfigurationsmodul 2 verbunden zu werden,
- eine erste interne Speichereinheit 5 des Field Programmable Gate Arrays 6, wobei in die erste interne Speichereinheit 5 ein partieller Bitstream geladen werden kann, wobei der partielle Bitstream verschlüsselt und authentifiziert ist und
- ein Entschlüsselungsmodul 8, wobei das Entschlüsselungsmodul ausgebildet ist, einen entschlüsselten partiellen Bitstream zu erstellen, wobei der entschlüsselte partielle Bitstream durch Authentifizieren und Entschlüsseln des partiellen Bitstreams durch Anwendung kryptographischer Mechanismen erstellt wird.

Der entschlüsselte partielle Bitstreams ist ausgebildet, in die Rekonfigurationsschnittstelle 4 geladen zu werden, wobei durch ein Laden des entschlüsselten partiellen Bitstreams ein drittes Rekonfigurationsmodul 3 erstellt wird, wobei das dritte Rekonfigurationsmodul 3 eine Rekonfiguration des ersten Rekonfigurationsmoduls 1 darstellt.

Das Entschlüsselungsmodul 8 kann beispielsweise das zweite Rekonfigurationsmodul 2 sein. Alternativ kann das Entschlüsselungsmodul 8 ein spezielles Kryptopmodul (z.B. AEAD, Authenticated Encryption with Associated Data) oder das erste Rekonfigurationsmodul 1 sein.

Das spezielle Kryptopmodul (z.B. AEAD, Authenticated Encryption with Associated Data) kann zum Beispiel von dem ersten Rekonfigurationsmodul 1 oder dem zweiten Rekonfigurationsmodul 2 beauftragt werden, eine Validierung (Bestätigung der Authentizität) und/oder ein Erstellen des entschlüsselten partiellen Bitstreams S3/ eine Entschlüsselung durchzuführen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: erstes Rekonfigurationsmodul
- 2: zweites Rekonfigurationsmodul
- 3: drittes Rekonfigurationsmodul
- 4: Rekonfigurationsschnittstelle
- 5: erste interne Speichereinheit
- 6: Field Programmable Gate Array
- 7: leeres Modul
- 8: Entschlüsselungsmodul

- S1: Schritt 1: Verbinden des zweiten Rekonfigurationsmoduls
- S2: Schritt 2: Laden eines partiellen Bitstreams
- S3: Schritt 3: Erstellen eines entschlüsselten partiellen Bitstreams
- S4: Schritt 4: Laden des entschlüsselten partiellen Bitstreams

## Patentansprüche

1. Verfahren für ein Rekonfigurieren eines ersten Rekonfigurationsmoduls (1) eines Field Programmable Gate Arrays (6) durch ein zweites Rekonfigurationsmodul (2) des Field Programmable Gate Arrays (6) mit den Schritten:
- Verbinden des zweiten Rekonfigurationsmoduls (2) (S1) mit einer Rekonfigurationsschnittstelle (4),
- Laden eines partiellen Bitstreams (S2) in eine erste interne Speichereinheit (5) des Field Programmable Gate Arrays (6), wobei der partielle Bitstream verschlüsselt und authentifiziert ist,
- Erstellen eines entschlüsselten partiellen Bitstreams (S3), wobei der entschlüsselte partielle Bitstream durch Authentifizieren und Entschlüsseln des partiellen Bitstreams durch Anwendung kryptographischer Mechanismen erstellt wird und
- Laden des entschlüsselten partiellen Bitstreams (S4) in die Rekonfigurationsschnittstelle (4), wobei durch das Laden des entschlüsselten partiellen Bitstreams ein drittes Rekonfigurationsmodul (3) erstellt wird, wobei das dritte Rekonfigurationsmodul (3) eine Rekonfiguration des ersten Rekonfigurationsmoduls (1) darstellt.

2. Verfahren nach Anspruch 1,
**dadurch gekennzeichnet,**
**dass** das zweite Rekonfigurationsmodul (2) nach dem Laden des entschlüsselten partiellen Bitstreams (S4) von der Rekonfigurationsschnittstelle (4) getrennt wird und das dritte Rekonfigurationsmodul (3) mit der Rekonfigurationsschnittstelle (4) verbunden wird.

3. Verfahren nach einem der vorherigen Ansprüche,
**dadurch gekennzeichnet,**
**dass** das zweite Rekonfigurationsmodul (2) zur Laufzeit des Field Programmable Gate Arrays (6) geladen wird.

4. Verfahren nach einem der vorherigen Ansprüche ohne Anspruch 2,
**dadurch gekennzeichnet,**
**dass** das zweite Rekonfigurationsmodul (2) nach dem Laden des entschlüsselten partiellen Bitstreams (S4) gelöscht wird.

5. Verfahren nach einem der vorherigen Ansprüche,
**dadurch gekennzeichnet,**
**dass** das erste Rekonfigurationsmodul (1) nach dem Laden des entschlüsselten partiellen Bitstreams (S4) gelöscht wird.

6. Verfahren nach einem der vorherigen Ansprüche,
**dadurch gekennzeichnet,**
**dass** das erste Rekonfigurationsmodul (1), das zweite Rekonfigurationsmodul (2) und/oder das dritte Rekonfigurationsmodul (3) eine Finite-State-Machine, eine programmierbare Finite-State-Machine und/oder eine Soft-CPU sind.

7. Verfahren nach einem der vorherigen Ansprüche,
**dadurch gekennzeichnet,**
**dass** die kryptographischen Mechanismen ein Authenticated Encryption with Associated Data (AEAD) Entschlüsselungsverfahren mit/ohne einer Physically Unclonable Function (PUF) zur Schlüsselgenerierung/Schlüsselspeicherung aufweisen.

8. Verfahren nach einem der vorherigen Ansprüche,
**dadurch gekennzeichnet,**
**dass** vor dem Verbinden des zweiten Rekonfigurationsmoduls (2) mit der Rekonfigurationsschnittstelle (4) (S1) ein Trennen des ersten Rekonfigurationsmoduls (1) von der Rekonfigurationsschnittstelle (4) durchgeführt wird.

9. Verfahren nach Anspruch 8,
**dadurch gekennzeichnet,**
**dass** das Trennen des ersten Rekonfigurationsmoduls (1) von der Rekonfigurationsschnittstelle (4) und das Verbinden des zweiten Rekonfigurationsmoduls (2) mit der Rekonfigurationsschnittstelle (4) (S1) durch ein Umschalten zwischen dem ersten Rekonfigurationsmodul (1) und dem zweiten Rekonfigurationsmodul (2) durchgeführt wird.

10. Verfahren nach Anspruch 9,
**dadurch gekennzeichnet,**
**dass** das Umschalten durch eine partielle Rekonfiguration zum Umschalten, einem Multiplexer und/oder einem Tristate durchgeführt wird.

11. Verfahren nach einem der vorherigen Ansprüche ohne Anspruch 5,
**dadurch gekennzeichnet,**
**dass** durch das Laden des entschlüsselten partiellen Bitstreams (S4) ein Rekonfigurieren des ersten Rekonfigurationsmoduls (1) durch das zweite Rekonfigurationsmodul (2) und ein Ersetzen des ersten Rekonfigurationsmoduls (1) durch ein drittes Rekonfigurationsmodul (3) initiiert wird.

12. Verfahren nach Anspruch 11,
**dadurch gekennzeichnet,**
**dass** das erste Rekonfigurationsmodul (1) vor dem Laden des entschlüsselten partiellen Bitstreams (S4) in eine zweite interne Speichereinheit des Field Programmable Gate Arrays kopiert (6) wird.

13. Verfahren nach einem der vorherigen Ansprüche,
**dadurch gekennzeichnet,**
**dass** der entschlüsselte partielle Bitstreams in der ersten internen Speichereinheit (5) gespeichert wird.

14. Field Programmable Gate Array (6) aufweisend:
- ein erstes Rekonfigurationsmodul (1),
- ein zweites Rekonfigurationsmodul (2), wobei das zweite Rekonfigurationsmodul (2) dazu ausgebildet ist, das erste Rekonfigurationsmodul (1) zu rekonfigurieren,
- eine Rekonfigurationsschnittstelle (4), wobei die Rekonfigurationsschnittstelle (4) dazu ausgebildet ist, mit dem zweiten Rekonfigurationsmodul (2) verbunden zu werden,
- eine erste interne Speichereinheit (5) des Field Programmable Gate Arrays (6), wobei in die erste interne Speichereinheit (6) ein verschlüsselter und authentifizierter partieller Bitstream geladen werden kann und
- ein Entschlüsselungsmodul (8), wobei das Entschlüsselungsmodul (8) ausgebildet ist, einen entschlüsselten partiellen Bitstreams zu erstellen,
wobei der entschlüsselte partielle Bitstream durch Authentifizieren und Entschlüsseln des partiellen Bitstreams durch Anwendung kryptographischer Mechanismen erstellt wird,
wobei der entschlüsselte partielle Bitstreams ausgebildet ist, in die Rekonfigurationsschnittstelle (4) geladen zu werden, wobei durch ein Laden des entschlüsselten partiellen Bitstreams ein drittes Rekonfigurationsmodul (3) erstellt werden kann, wobei das dritte Rekonfigurationsmodul (3) eine Rekonfiguration des ersten Rekonfigurationsmoduls (1) darstellt.

15. Field Programmable Gate Array (6) nach Anspruch 14, ausgebildet ein Verfahren nach einem der Ansprüche 1 bis 13 durchzuführen.
